**Europäisches Patentamt**

**European Patent Office**

**Office européen des brevets**

(19)

(11) Veröffentlichungsnummer: **0 187 898**
**B1**

(12)

# EUROPÄISCHE PATENTSCHRIFT

(45) Veröffentlichungstag der Patentschrift:
**29.06.88**

(21) Anmeldenummer: **85112171.5**

(22) Anmeldetag: **25.09.85**

(51) Int. Cl.⁴: **G 01 N 21/78,** G 01 N 31/22, G 08 B 17/10

(54) **Gasmess- und Warnvorrichtung.**

(30) Priorität: **15.01.85 DE 3501093**

(43) Veröffentlichungstag der Anmeldung:
**23.07.86 Patentblatt 86/30**

(45) Bekanntmachung des Hinweises auf die Patenterteilung:
**29.06.88 Patentblatt 88/26**

(84) Benannte Vertragsstaaten:
**DE FR GB NL**

(56) Entgegenhaltungen:
**DE-A-1 598 021**
**DE-A-2 702 689**
**DE-B-2 628 790**
**DE-B-2 814 843**
**DE-C-2 840 867**
**US-A-4 063 821**

(73) Patentinhaber: **Drägerwerk Aktiengesellschaft, Moislinger Allee 53- 55, D-2400 Lübeck 1 (DE)**

(72) Erfinder: **Matthiessen, Hans, Dipl.- Ing., Heischbrook 22, D-2407 Gross Parin (DE)**
Erfinder: **Winkler, Jörg, Dipl.- Ing., Stettinerstrasse 4a, D-2406 Stockelsdorf (DE)**

## Beschreibung

Die Erfindung betrifft eine Gasmeß- und Warnvorrichtung mit einem von dem nachzuweisenden Gas durchströmten Prüfröhrchen, mit einer photoelektrischen Abtasteinrichtung zur Abtastung des Prüfröhrchens an einer Anzahl von entlang der Strömungsrichtung in Abstand zueinanderliegenden Orten zum Nachweis einer sich im Prüfröhrchen ausbreitenden Umsetzungszone mit einer an die photoelektrische Abtasteinrichtung angeschlossenen Auswerteschaltung.

Mit einem chemischen Reagenz gefüllte Prüfröhrchen dienen zur Bestimmung gasförmiger Bestandteile in Gasgemischen, die durch das Prüfröhrchen gesaugt oder gedrückt werden. Durch die Umsetzung mit dem pulverförmigen oder körnigen Reagenz entsteht eine farblich veränderte Umsetzungszone; Ihre Länge ist proportional zur Menge des in das Prüfröhrchen eingeströmten Gasbestandteiles, auf den das Reagens spezifisch anspricht. Bei bekannter Menge des durch das Prüfröhrchen hindurchtretenden Gasgemisches läßt sich aus der Länge der Umsetzungszone der Anteil des nachzuweisenden Gasbestandteiles bzw. dessen Konzentration ermitteln.

Aus der DE-PS-2 840 867 ist eine Gasmeßvorrichtung bekannt, bei der das Wandern der Umsetzungszone im Prüfröhrchen durch eine photoelektrische Abtasteinrichtung festgestellt und über einen angeschlossenen Empfänger als Meßgröße bestimmt wird. Das Prüfröhrchen ist durch eine Lichtquelle gleichmäßig beleuchtet, und die von der Umsetzungszone reflektierte Lichtstrahlung wird über eine Faseroptik mit Lichtleitern in einem Empfänger bestimmt. Eine solche Meßvorrichtung ergibt eine Überwachung der fortschreitenden Länge der Umsetzungszone ohne bewegbare Teile und ermöglicht die Ableitung elektrischer Meß- oder Steuersignale, welche sowohl die Konzentration des nachzuweisenden Bestandteils anzeigen, als auch bei der Überschreitung bestimmter Grenzwerte eine Alarmeinrichtung auslösen.

Die Erfindung geht von der Aufgabenstellung aus, eine Gasmeß- und Warnvorrichtung der eingangs beschriebenen Art so auszubilden, daß ohne bewegbare Teile und in einer schaltungstechnisch einfachen Anordnung eine Vielzahl von Längenmeßwerten ermittelt und in gewünschter Weise verarbeitet werden kann. Außerdem wird eine scharfe eindeutige Unterscheidung der Grenze der Umsetzungszone mit hohem Auflösungsvermögen angestrebt. Zur Lösung dieser Aufgabenstellung ist - ausgehend von der eingangs dergelegten Vorrichtung - gemäß der Erfindung vorgesehen, daß die photoelektrische Abtasteinrichtung eine Abbildungsoptik enthält, welche das von mindestens einer Lichtquelle beleuchtete Prüfröhrchen auf eine lichtempfindliche Zeile von gleichartigen Sensorelementen abbildet, die sich in Längsrichtung des Bildes des Prüfröhrchens erstrecken, und daß die Auswerteschaltung zur Abgabe eines Meßsignals durch diejenigen Sensorelemente gesteuert wird, die innerhalb der optisch abgebildeten Umsetzungszone liegen.

Eine solche Vorrichtung kann mit verschiedenen Sensoren, vorzugsweise jedoch mit einer lichtempfindlichen Diodenzeile bestückt werden.

Ein besonderer Vorteil kann eventuell dadurch erreicht werden, daß die Abbildungsoptik eine vergrößerte Abbildung liefert und dadurch eine Verteilung der Abbildung der Umsetzungszone auf eine größere Anzahl von Sensorelementen hervorruft. Hierdurch kann eine Steigerung der Auflösung erreicht werden.

Es erscheint ferner zweckmäßig, die verwendete Lichtquelle in Bezug auf das Prüfröhrchen so anzuordnen, daß die Zeile der Sensoren außerhalb des Glanzwinkels des an seiner Oberfläche reflektierenden Prüfröhrchens liegt. Dadurch wird eine Störung der gewünschten Abbildung der Umsetzungszone vermieden. Gegebenenfalls können zwischen der Lichtquelle und dem Prüfröhrchen zusätzliche Filterelemente angeordnet sein, welche eine Kontraststeigerung zwischen der abgebildeten Umsetzungszone und dem verbleibendem Teil der Länge des Prüfröhrchens ergeben.

Zum Ausgleich eines Driftfehlers erscheint es vorteilhaft, am Ende der verwertbaren Umsetzungszone des Prüfröhrchens eine besondere Referenz-Remissionsfläche vorzusehen und aus der Abbildung dieser Referenz-Remissionsfläche am Ende der Sensorzeile ein Signal zur Driftkorrektur abzuleiten. Damit lassen sich u.a. Temperatureinflüsse ausschalten.

Bei Verwendung einer Diodenzeile enthält die Auswerteschaltung zweckmäßig einen Vorverstärker, einen Analog- und Digital-Wandler, einen ersten Digitalspeicher für die Abtastwerte vor einer Begasung, einen zweiten Digitalspeicher für die Abtastwerte nach einer Begasung und ein digitales Rechenwerk in Verbindung mit einer Anzeige- bzw. Alarmeinrichtung.

Eine vorteilhafte konstruktive Ausbildung kann vorsehen, daß sich in einem oberen Gehäuseteil eine Halterung für das mit einer Schlauchpumpe verbindbare Prüfröhrchen befindet, und daß in einem unteren Gehäuseteil zwei Lampen symmetrisch zu einem Umlenkspiegel angeordnet sind, welcher den Strahlengang von dem beleuchteten Prüfröhrchen in die Abbildungsoptik umlenkt. Hinter dieser gegebenenfalls aus nur einer Sammellinse bestehenden Abbildungsoptik befindet sich die Diodenzeile, deren Anschlüsse mit der Auswerteschaltung verbunden sind.

Durch die Anwendung der Merkmale der Erfindung wird eine Meßvorrichtung geschaffen, die eine sichere Überwachung der Umsetzungszone mit hohem Auflösungsvermögen ergibt und die in einer raumsparenden Kompaktausführung auch in tragbaren Geräten untergebracht werden kann.

In der Zeichnung ist ein Ausführungsbeispiel der Erfindung schematisch dargestellt; es zeigen:

Fig. 1 eine Erläuterung des Prinzips der optischen Abbildung des Prüfröhrchens,

Fig. 2 eine Vorderansicht einer Geräteausführung unter Verwendung des Grundprinzips nach Fig. 1,

Fig. 3 eine teilweise geschnittene Seitenansicht der Geräteausführung nach Fig. 2.

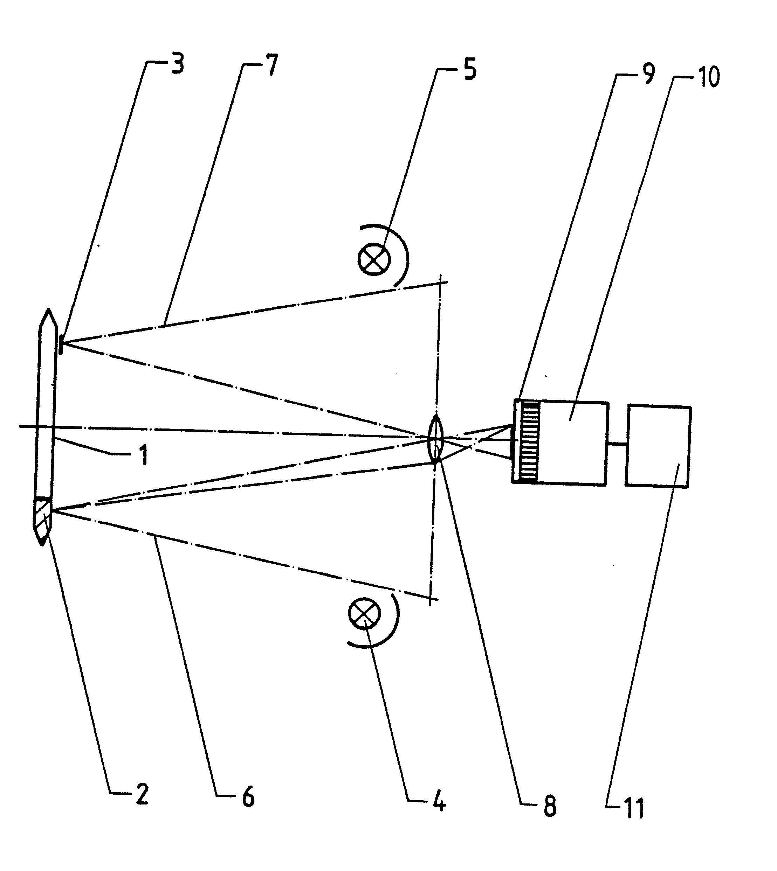

In Fig. 1 ist ein Prüfröhrchen 1 dargestellt, in dem sich eine Umsetzungszone 2 gebildet hat. Am Ende der ausnutzbaren Länge des Prüfröhrchens 1 befindet sich eine Referenz-Remissionsfläche 3. Das Prüfröhrchen 1 wird durch zwei Lampen 4, 5 gleichmäßig beleuchtet. Längs der Linien 6 und 7 ist eine innere Begrenzung der Beleuchtung zur Vermeidung von Spiegelungen an der Glasoberfläche des Prüfröhrchens vorgesehen.

Das Prüfröhrchen 1 wird durch eine als Sammellinse ausgebildete Abbildungsoptik 8 auf eine Diodenzeile 9 abgebildet, wobei die Diodenanzahl in der technischen Ausführung mehrere Hundert bis Tausend beträgt.

Die Ausgangssignale der Diodenzeile 9 werden in eine Auswerteschaltung 10 eingegeben, welche über ein eingebautes Schieberegister das Auslesen der Diodenzeile in entsprechend vorgegebenem Zeittakt ermöglicht. Die Auswerteschaltung 10 enthält einen Vorverstärker, sowie einen Analog-Digital-Wandler, welcher die ausgelesenen Signale aus der Diodenzeile digital umsetzt, sowie einen ersten Digitalspeicher, in dem diese Signale, und zwar aufgenommen vor einer evtl. Begasung abgespeichert werden. In der Auswerteschaltung ist ferner ein zweiter Digitalspeicher enthalten, welcher die ebenfalls binär umgesetzten Abtastwerte nach der Begasung abspeichert. Außerdem ist ein digitales Rechenwerk zur Signalverarbeitung in Form eines Mikrocomputers vorgesehen, der Ausgabewerte zur Meßanzeige in einem Anzeigegerät 11 bzw. zur Auslösung eines Warnsignals abgibt.

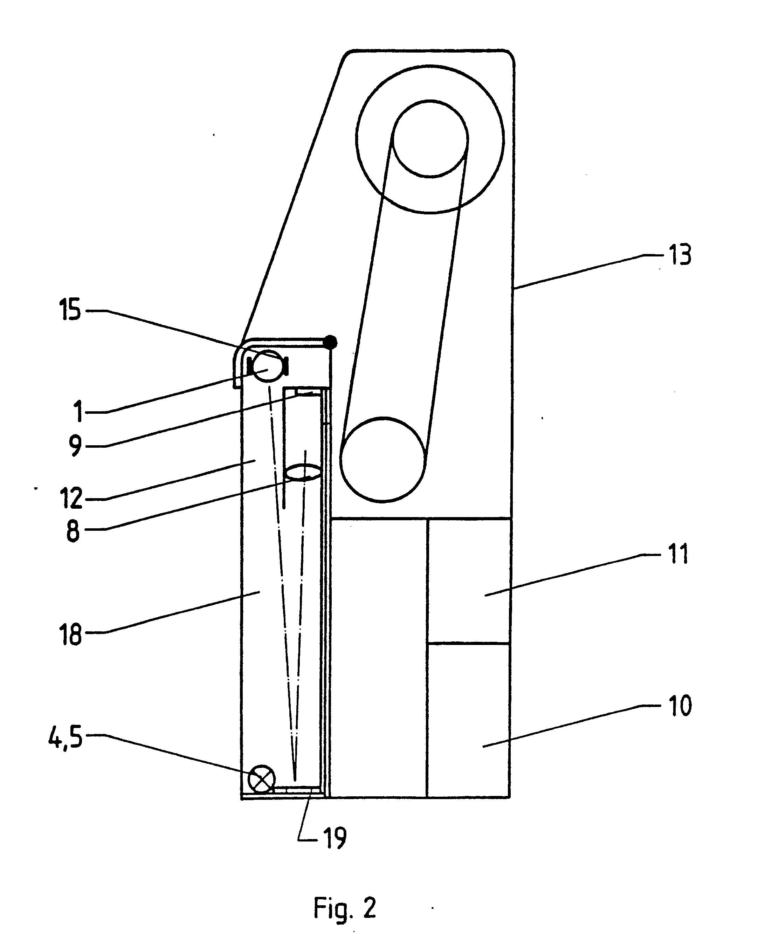

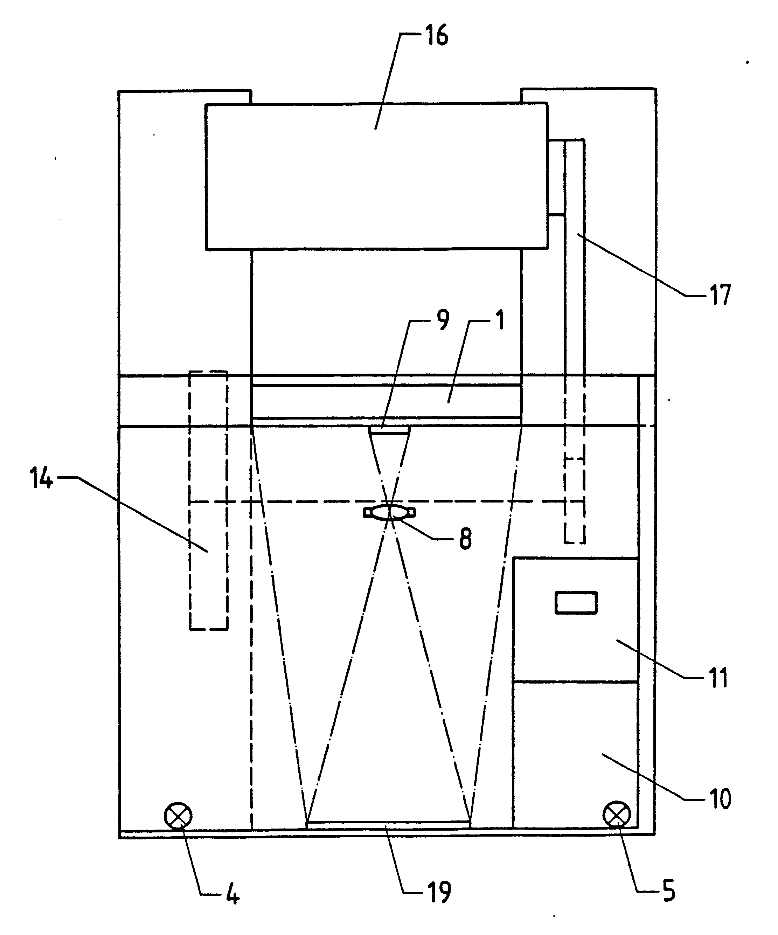

Eine angepaßte Geräteausführung unter Verwendung des prinzipiellen Aufbaus ist in den Figuren 2 und 3 beschrieben.

In einem oberen Gehäuseteil 12 eines tragbaren Gehäuses 13 befindet sich eine mit einer Schlauchpumpe 14 verbundene Absaughalterung 15 für das Prüfröhrchen. Zum Antrieb der Schlauchpumpe 14 ist ein Antriebsmotor 16 vorgesehen, welcher mit der Schlauchpumpe 14 über einen Riemenantrieb 17 in Verbindung steht. Durch die Schlauchpumpe 14 wird Umgebungsluft durch das Prüfröhrchen angesaugt.

In einem unteren Gehäuseteil 18 befinden sich die beiden Lampen 4, 5 in symmetrischer Anordnung zu einem Umlenkspiegel 19, der die Abbildung des beleuchteten Prüfröhrchens 1 in die im oberen Gehäuseteil 12 angeordnete Abbildungsoptik 8 umlenkt. Hinter dieser Abbildungsoptik 8 befindet sich die Diodenzeile 9. Die Auswerteschaltung 10 ist in Form einer Elektronikleiterplatte ausgebildet und mit dem digital anzeigenden Anzeigegerät 11 direkt verbunden.

Beim Betrieb des Meßgerätes wird der Antriebsmotor 16 eingeschaltet und dadurch mit Hilfe der Schlauchpumpe 14 Umgebungsluft für eine definierte Zeitspanne durch das Prüfröhrchen 1 angesaugt. Es bildet sich eine wandernde Grenze der Umsetzungszone 2, die über die Abbildungsoptik 8 auf der Diodenzeile 9, gegebenenfalls entsprechend vergrößert, abgebildet wird, und deren Erstreckung die von der Auswerteschaltung 10 abgefragten Signalwerte bestimmt. Zunächst wird die Diodenzeile ohne Gasbelastung ausgelesen und die Werte werden im ersten Digitalspeicher gespeichert. Zusätzlich zu einer Normierung der Speicherwerte erfolgt mit Hilfe der Abbildung der beleuchteten Remissionsfläche 3 auf der Diodenzeile 9 eine Driftkorrektur, welche Temperatureinflüsse ausgleicht. Danach wird der Ort der Grenze der Umsetzungszone 2 durch erneutes Auslesen der Diodenzeile bestimmt und im zweiten Digitalspeicher abgespeichert. Danach erfolgt die Verarbeitung der Speicherwerte und die Berechnung der Wanderungsgeschwindigkeit sowie der gewünschten Meßwerte (aktuelle toxische Konzentration, 15 min. Mittelwert STEL Expositionswert und dergleichen). Die Meßwerte werden im Anzeigegerät 11 ausgegeben, bzw. dienen zur Auslösung einer in der Zeichnung nicht dargestellten Warnvorrichtung.

**Patentansprüche**

1. Gasmeß- und Warnvorrichtung mit einem von dem nachzuweisenden Gas durchströmten Prüfröhrchen (1), mit einer photoelektrischen Abtasteinrichtung zur Abtastung des Prüfröhrchens an einer Anzahl von entlang der Strömungsrichtung in Abstand zueinander liegenden Orten zum Nachweis einer durch sich im Prüfröhrchen (1) ausbreitenden Umsetzungszone (2) einer an die photoelektrische Abtasteinrichtung angeschlossenen Auswerteschaltung (10), dadurch gekennzeichnet, daß die photoelektrische Abtasteinrichtung eine Abbildungsoptik (8) enthält, welche das von mindestens einer Lichtquelle (4, 5) beleuchtete Prüfröhrchen (1) auf eine lichtempfindliche Zeile von gleichartigen Sensorelementen (9) abbildet, die sich in Längsrichtung des Bildes des Prüfröhrchens (1) erstrecken, und daß die Auswerteschaltung (10) zur Abgabe eines Meßsignals durch diejenigen Sensorelemente gesteuert wird, die innerhalb der optisch abgebildeten Umsetzungszone (2) liegen.

2. Vorrichtung nach Anspruch 1, <u>dadurch gekennzeichnet</u>, daß die Abbildungsoptik (8) zur Erzeugung einer vergrößerten Abbildung ausgebildet ist.

3. Vorrichtung nach Anspruch 1, <u>dadurch gekennzeichnet</u>, daß die Zeile der Sensorelemente eine lichtempfindliche Diodenzeile (9) ist.

4. Vorrichtung nach Anspruch 1, <u>dadurch gekennzeichnet</u>, daß die Lichtquelle (4, 5) in Bezug auf das zu beleuchtende Prüfröhrchen (1) so angeordnet ist, daß die Zeile der Sensoren (9) außerhalb des Glanzwinkels des Prüfröhrchens (1) liegt.

5. Vorrichtung nach Anspruch 1, <u>dadurch gekennzeichnet</u>, daß die Zeile der Sensoren (9) zur Abgabe eines der Anzahl der durch die abgebildete Umsetzungszone bedeckten Sensoren entsprechenden analogen Ausgangssignals ausgebildet ist.

6. Vorrichtung nach Anspruch 1, <u>dadurch gekennzeichnet</u>, daß am Ende der verwertbaren Umsetzungszone des Prüfröhrchens (1) eine Referenz-Remissionsfläche (3) vorgesehen ist, und daß aus der Abbildung dieser Referenz-Remissionsfläche (3) am Ende der Sensorzeile ein Signal zur Driftkorrektur abgeleitet wird.

7. Vorrichtung nach Anspruch 3, <u>dadurch gekennzeichnet</u>, daß die Auswerteschaltung für die Diodenzeile einen Vorverstärker, einen Analog-Digital-Wandler, einen ersten Digitalspeicher für die Abtastwerte vor einer Begasung, einen zweiten Digitalspeicher für die Abtastwerte nach einer Begasung und ein digitales Rechenwerk in Verbindung mit einer Anzeige- bzw. Alarmeinrichtung enthält.

8. Vorrichtung nach Anspruch 1, <u>dadurch gekennzeichnet</u>, daß in einem oberen Gehäuseteil (12) eine Absaughalterung (15) für das mit einer Schlauchpumpe (14) verbindbare Prüfröhrchen (1) vorgesehen ist, daß sich in einem unteren Gehäuseteil (18) zwei Lampen (4, 5) und ein Umlenkspiegel (19) befinden, welcher den Strahlengang von dem beleuchteten Prüfröhrchen (1) in die Abbildungsoptik (8) umlenkt, und daß die Sensorzeile (9) hinter dieser Abbildungsoptik (8) angeordnet ist.

## Claims

1. A gas measuring and warning device with a detector tube (1) through which the gas to be detected flows, with a photo-electric monitoring device for monitoring the detector tube at a number of adjacent places at intervals along the direction of flow, in order to detect a reaction zone (2) expanding in the detector tube, and with an evaluating circuit (10) connected to the photo-electric monitoring device, characterised in that the photo-electric monitoring device contains imaging optics (8), which display the detector tube (1), which is illuminated by at least one light source (4, 5), on a light-sensitive row of similar sensor elements (9) extending in the longitudinal direction of the image of the detector tube (1), and in that the evaluating circuit (10) is controlled in such a way that it transmits a measuring signal by means of those sensor elements which lie inside the optically reproduced reaction zone (2).

2. A device according to claim 1, characterised in that the imaging optics (8) are designed to produce an enlarged image.

3. A device according to claim 1, characterised in that the row of sensor elements is a light-sensitive row of diodes (9).

4. A device according to claim 1, characterised in that the light source (4, 5) is arranged relative to the detector tube (1), which is to be illuminated, in such a way that the row of sensors (9) lies outside the angle of incidence of the detector tube (1).

5. A device according to claim 1, characterised in that the row of sensors (9) is designed to emit an analog output signal corresponding to the number of the sensors covered by the image of the reaction zone.

6. A device according to claim 1, characterised in that a reference-reflectance surface (3) is provided at the end of the reaction zone, which can be evaluated, of the detector tube (1), and in that a signal for correcting the drift is derived from the image of this reference-reflectance surface (3) at the end of the row of sensors.

7. A device according to claim 3, characterised in that the evaluation circuit contains an input amplifier for the row of diodes, an analog-digital converter, a first digital memory for the monitoring data before a gassing takes place, a second digital memory for the monitoring data after a gassing takes place, and a digital arithmetic unit connected to an indication or alarm device.

8. A device according to claim 1, characterised in that a suction mounting (15) for the detector tube (1), which may be connected to a hose pump (15), is provided in an upper part (12) of the casing, in that two lamps (4, 5) and a reflecting mirror (19), which deflects the path of rays of the illuminated detector tube (1) into the imaging optics (8), are provided in a lower part (18) of the casing, and in that the row of sensors is arranged behind these imaging optics (8).

## Revendications

1. Dispositif de mesure de gaz et d'alarme, avec un tube à essai (1) traversé par le gaz a déceler, avec un dispositif de balayage photoélectrique pour balayer le tube à essai en un certain nombre d'endroits situés à distance les uns des autres le long du sens de flux afin de déceler une zone de transformation (2) se propageant dans le tube à essai, et avec un montage évaluateur (10) relié au dispositif de balayage photoélectrique, caractérisé en ce que le dispositif de balayage photoélectrique contient une optique de reproduction (8) qui reproduit le tube à essai (1) éclairé par au moins une source lumineuse (4, 5) sur une rangée photosensible de capteurs identiques (9) qui s'étendent dans le sens longitudinal de l'image du tube à essai (1), et en ce que le montage évaluateur (10) est commandé pour délivrer un signal de mesure par les capteurs qui se trouvent à l'intérieur de la zone de transformation (2) reproduite optiquement.

2. Dispositif selon la revendication 1, caractérisé en ce que l'optique de reproduction (8) est conçue pour produire une reproduction agrandie.

3. Dispositif selon la revendication 1, caractérisé en ce que la rangée de capteurs est une rangée de diodes photosensibles (9).

4. Dispositif selon la revendication 1, caractérisé en ce que la source lumineuse (4, 5) est disposée, par rapport au tube à essai (1) à éclairer, de telle sorte que la rangée de capteurs (9) se trouve à l'extérieur de l'angle de brillance du tube à essai (1).

5. Dispositif selon la revendication 1, caractérisé en ce que la rangée de capteurs (9) est conçue pour délivrer un signal de sortie analogique correspondant au nombre de capteurs couverts par la zone de transformation reproduite.

6. Dispositif selon la revendication 1, caractérisé en ce qu'il est prévu à l'extrémité de la zone de transformation exploitable du tube à essai (1) une surface de réflectance de référence (3), et en ce qu'un signal de correction de dérive est, à l'extrémité de la rangée de capteurs, dérivé de l'image de cette surface de réflectance de référence (3).

7. Dispositif selon la revendication 3, caractérisé en ce que le montage évaluateur de la rangée de diodes contient un préamplificateur, un convertisseur analogique-numérique, une première mémoire numérique pour les valeurs de balayage avant une absorption de gaz, une deuxième mémoire numérique pour les valeurs de balayage après une absorption de gaz, et un organe de calcul numérique fonctionnant conjointement avec un dispositif d'affichage et/ou d'alarme.

8. Dispositif selon la revendication 1, caractérisé en ce qu'il est prévu dans une partie de carter supérieure (12) un support d'aspiration (15) pour le tube à essai (1) reliable à une pompe flexible (14), en ce que deux lampes (4, 5) et un miroir de renvoi (19) se trouvent dans une partie de carter inférieure (18), le miroir renvoyant la marche des rayons du tube à essai (1) éclairé à l'optique de reproduction (8), et en ce que la rangée de capteurs (9) est disposée derrière cette optique de reproduction (8).

Fig. 1

Fig. 2

Fig. 3